(19) Europäisches Patentamt / European Patent Office / Office européen des brevets

(11) **EP 4 568 045 A1**

(12) **DEMANDE DE BREVET EUROPEEN**

(43) Date de publication:
**11.06.2025 Bulletin 2025/24**

(21) Numéro de dépôt: **24217653.5**

(22) Date de dépôt: **05.12.2024**

(51) Classification Internationale des Brevets (IPC):
*H02J 3/00* (2006.01)     *G06Q 50/06* (2024.01)
*H02J 3/14* (2006.01)     *H02J 13/00* (2006.01)
*G06Q 10/04* (2023.01)

(52) Classification Coopérative des Brevets (CPC):
**H02J 3/14; G06Q 10/04; G06Q 50/06; H02J 3/003;
H02J 13/00002;** G01D 2204/26; H02J 2310/60

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **07.12.2023 FR 2313719**

(71) Demandeur: **SAGEMCOM ENERGY & TELECOM
SAS
92270 Bois-Colombes (FR)**

(72) Inventeur: **TEBOULLE, Henri
92270 Bois-Colombes (FR)**

(74) Mandataire: **Novagraaf Technologies
Bâtiment O2
2, rue Sarah Bernhardt
CS90017
92665 Asnières-sur-Seine Cedex (FR)**

(54) **MÉTHODES ET DISPOSITIFS DE GESTION DE DÉLESTAGE DANS UN RÉSEAU DE DISTRIBUTION D'UNE RESSOURCE**

(57)     Un délestage est mis en oeuvre dans un réseau de distribution d'une ressource afin d'éviter les surconsommations. Le réseau comporte au moins une tête de réseau et une pluralité de compteurs configurés pour mesurer une consommation de ladite ressource par un client et pour transmettre à la tête de réseau des informations client représentatives de la consommation du client sur une plage de temps déterminée. Une consommation prévisionnelle globale est déterminée, à partir des informations client transmises par les compteurs, pour l'ensemble des compteurs pour la plage de temps déterminée. Une ou plusieurs périodes de délestage sont déterminées, en comparant la consommation prévisionnelle globale à un seuil global prédéfini. Pour chacune, les compteurs à délester sont sélectionnés en fonction des gains de délestage attendus pour les compteurs éligibles. Et une commande de délestage leur est envoyée qui concerne une ou plusieurs occurrences futures de la plage de temps déterminée.

[Fig. 4]

EP 4 568 045 A1

**Description**

DOMAINE TECHNIQUE

Les différents exemples de réalisation décrits dans la présente divulgation concernent le délestage dans un réseau de distribution d'une ressource, par exemple un réseau de distribution d'électricité, de gaz, de chaleur, etc... afin de contrôler la demande et d'éviter les surconsommations pouvant entraîner un écroulement du réseau de distribution.

ARRIERE PLAN

Le document US2022/0376504A1 décrit une méthode de délestage dans un réseau électrique déclenchée à la suite d'une détection d'évènement entraînant une insuffisance de génération d'énergie dans le réseau.

Il existe un besoin pour une méthode de gestion de délestage dans un réseau de distribution qui réponde aux variations de la demande.

RESUME

Un premier aspect de la présente divulgation concerne une méthode de la gestion de délestage dans un réseau de distribution d'une ressource, le réseau comportant au moins une tête de réseau et une pluralité de compteurs configurés pour mesurer une consommation de ladite ressource par un client, transmettre à la tête de réseau des informations représentatives de la consommation du client, recevoir une commande de délestage en provenance de la tête de réseau et déclencher un basculement d'un mode de fonctionnement hors délestage à un mode de fonctionnement avec délestage en fonction de ladite commande. Cette méthode de gestion de délestage comporte en outre des étapes pour déterminer, à partir des informations représentatives de la consommation du client, une consommation prévisionnelle globale sur une plage de temps pour l'ensemble des compteurs; déterminer une ou plusieurs périodes de délestage pour ladite plage de temps, en comparant la consommation prévisionnelle globale à un seuil global prédéfini; déterminer un ou plusieurs compteurs éligibles au délestage, pour la ou les périodes de délestage, en comparant les informations représentatives de la consommation du client sur la période de délestage à un seuil client prédéfini; sélectionner un ou plusieurs compteurs à délester parmi les compteurs éligibles au délestage, pour obtenir un gain cible permettant de compenser un écart entre un maximum de la consommation prévisionnelle globale sur la période de délestage et le seuil global prédéfini; envoyer une commande de délestage aux compteurs sélectionnés, ladite commande concernant une ou plusieurs occurrences futures de ladite plage de temps et spécifiant une ou plusieurs périodes de délestage pour ladite plage de temps.

Avantageusement, seules sont prise en compte les informations représentatives de la consommation du client en mode hors délestage, pour la détermination de la consommation prévisionnelle globale et/ou pour la détermination des compteurs éligibles au délestage.

Selon un premier mode de réalisation, la méthode de gestion de délestage comporte une étape de calcul d'un nombre de compteurs à délester en fonction du rapport entre l'écart à compenser et le seuil client prédéfini, la sélection dudit nombre de compteurs à délester parmi les compteurs éligibles se faisant par exemple de façon aléatoire.

Selon ce premier mode de réalisation, la commande de délestage comporte, par exemple, une indication de début et de fin, ou de durée, pour chaque période de délestage pour ladite plage de temps. Par exemple, les indications de début transmises à différents compteurs pour une même période de délestage sont décalées dans le temps les unes par rapport aux autres.

Selon un second mode de réalisation, la méthode de gestion de délestage comporte une étape pour déterminer un gain de délestage pour les compteurs éligibles, en comparant des informations représentatives de la consommation du client en mode hors délestage, à des informations, apprises pendant une phase d'apprentissage, représentatives de la consommation du client en mode avec délestage, et la sélection des compteurs à délester est fonction desdits gains de délestage.

Par exemple, durant la phase d'apprentissage, pour chaque plage de temps considérée, une commande de délestage est envoyée à chaque compteur par tranches de temps, afin d'obtenir des informations représentatives de la consommation du client en mode avec délestage, pour chaque tranche de temps de chaque plage de temps, les périodes de délestage étant calées sur lesdites tranches de temps.

Par exemple, la sélection des compteurs à délester comporte une détermination d'un premier nombre de compteurs supérieur au nombre de compteurs nécessaire pour obtenir le gain cible, et une sélection aléatoire d'un deuxième nombre de compteurs, inférieur au premier nombre, pour obtenir le gain cible.

Par exemple, la sélection des compteurs à délester comporte une détermination parmi les compteurs éligibles pris par ordre de gain de délestage décroissant, d'un premier, deuxième, et troisième groupe comportant respectivement Q1, Q2 et Q3 compteurs éligibles, la somme des gains de délestage des Q1+Q2 compteurs du premier et du deuxième groupe permettant d'atteindre le gain cible, et la somme des gains de délestage des Q2+Q3 compteurs du deuxième et du troisième groupe permettant d'atteindre le gain cible, puis une sélection parmi les Q1+Q2+Q3 compteurs éligibles de Q2+Q3 compteurs à délester.

Selon ce second mode de réalisation, la commande de délestage comporte, par exemple, un nombre de période de délestage pour ladite plage de temps et un identifiant de chaque période de délestage.

Est également divulgué un produit programme d'ordinateur comportant des instructions qui lorsqu'elles sont exécutées par au moins un processeur causent la mise en oeuvre d'une telle méthode de gestion de délestage.

Est également divulgué un support de stockage lisible par un ordinateur comportant des instructions qui lorsqu'elles sont exécutées par un processeur causent la mise en oeuvre d'une telle méthode de gestion de délestage. Dans un mode de réalisation, le support de stockage est non transitoire.

Un deuxième aspect de la présente divulgation concerne un dispositif tête de réseau qui comporte des moyens pour la mise en oeuvre d'une telle méthode de gestion de délestage dans un réseau de distribution.

Un troisième aspect de la présente divulgation concerne une méthode de délestage par un compteur appartenant à un réseau de distribution d'une ressource, le compteur étant configuré pour mesurer une consommation de ladite ressource par un client et pour transmettre à une tête de réseau du réseau de distribution des informations client représentatives de la consommation du client sur une plage de temps déterminée. La méthode comporte en outre une étape de réception d'une commande de délestage provenant de la tête de réseau, la commande de délestage spécifiant une ou plusieurs périodes de délestage à mettre en oeuvre pendant une ou plusieurs occurrences futures de la plage de temps déterminée.

Dans un premier exemple, la commande de délestage comporte une indication de début et de fin, ou de durée, pour chaque période de délestage. Dans un second exemple, la commande de délestage comporte un nombre de périodes de délestage pour ladite plage de temps et un identifiant de chaque période de délestage. Avantageusement, le délestage est déclenché et/ou terminé à un instant aléatoire par rapport aux périodes de délestage spécifiées dans la commande de délestage.

Est également divulgué un produit programme d'ordinateur comportant des instructions qui lorsqu'elles sont exécutées par au moins un processeur causent la mise en oeuvre d'une telle méthode de délestage.

Est également divulgué un support de stockage lisible par un ordinateur comportant des instructions qui lorsqu'elles sont exécutées par un processeur causent la mise en oeuvre d'une telle méthode de délestage. Dans un mode de réalisation, le support de stockage est non transitoire.

Un quatrième aspect de la présente divulgation concerne un dispositif compteur comportant des moyens de mise en oeuvre d'une telle méthode de délestage.

Les dispositifs tête de réseau et compteur peuvent être constitués par des moyens logiciels, c'est-à-dire des instructions destinées à être exécutées par un ensemble de circuits pour effectuer une ou plusieurs ou toutes les opérations ou étapes à réaliser par la tête de réseau et/ou le compteur, en application des méthodes décrites dans la présente divulgation. L'ensemble de circuits peut être constitué par une circuiterie dédiée. Il peut aussi être constitué à partir d'un ou plusieurs processeurs et d'une ou plusieurs mémoires comprenant un ou plusieurs codes de programme informatique, lesdits processeurs, mémoires et codes informatiques étant configurés pour amener la tête de réseau et/ou le compteur à exécuter une ou plusieurs ou toutes les étapes des méthodes décrites dans la présente divulgation.

BREVE DESCRIPTION DES FIGURES

Les exemples de réalisation seront mieux compris à la lumière de la description détaillée qui va suivre et des dessins qui l'accompagnent, lesquels sont donnés à titre d'illustration uniquement et ne sont donc pas limitatifs de la présente divulgation.

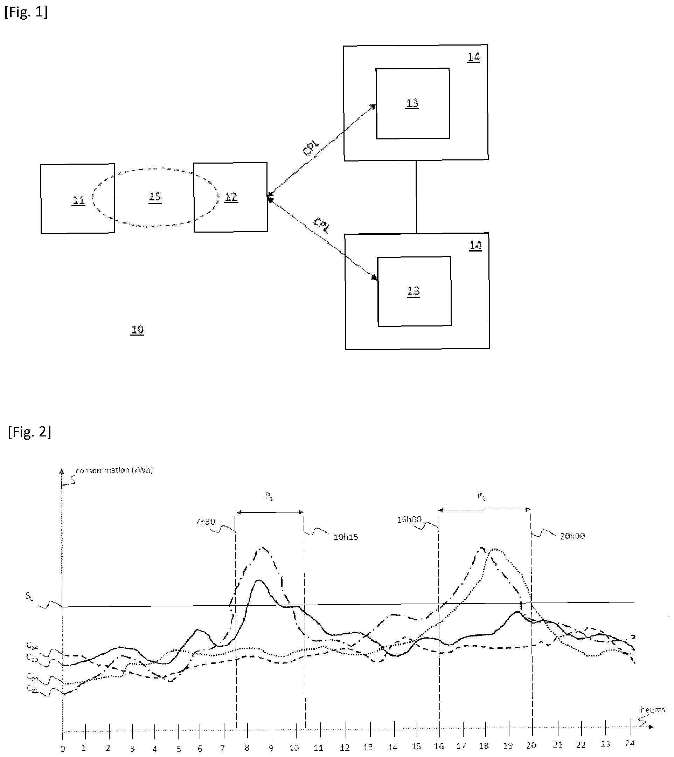

La figure FIG.1 est un schéma d'un exemple de réseau de distribution.

La figure FIG.2 représente plusieurs courbes de charge de clients sur une plage de temps déterminée.

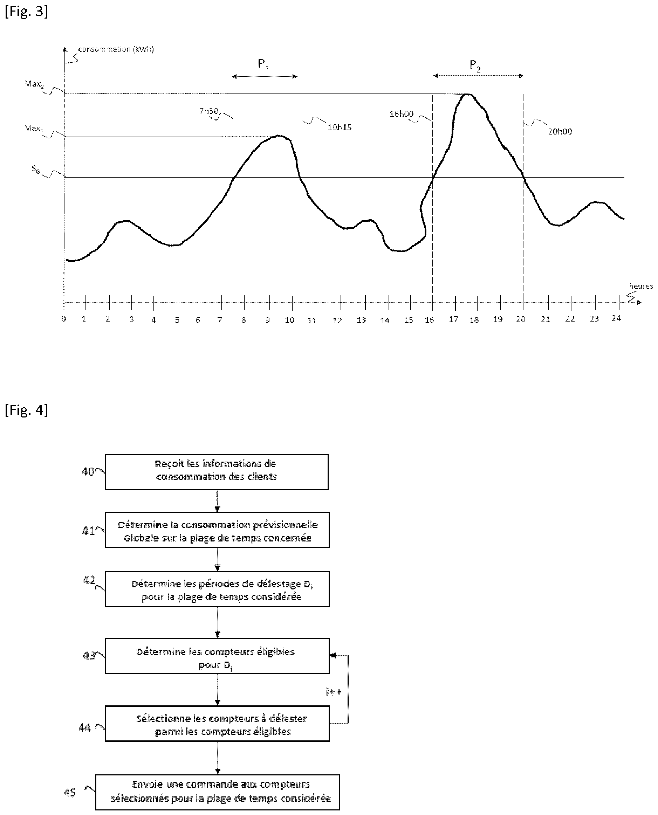

La figure FIG.3 représente une courbe prévisionnelle globale sur la même plage de temps déterminée.

La figure FIG.4 est un diagramme décrivant les étapes d'une méthode de gestion de délestage destinée à être implémentée dans une tête de réseau d'un réseau de distribution.

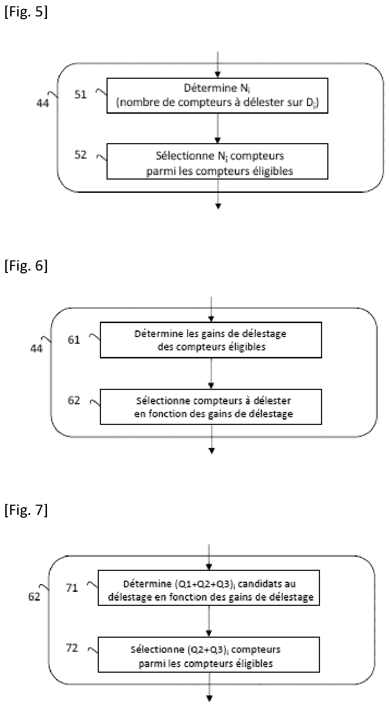

La figure FIG.5 décrit l'étape de sélection des compteurs à délester dans un premier mode de réalisation.

La figure FIG.6 décrit l'étape de sélection des compteurs à délester dans un second mode de réalisation.

La FIG.7 décrit une mise en oeuvre particulière de l'étape de sélection des compteurs à délester dans le second mode de réalisation.

La FIG.8 reprend les courbes de charge de la FIG.2 en faisait apparaître deux périodes de délestage correspondant à deux tranches de temps de la plage de temps déterminée.

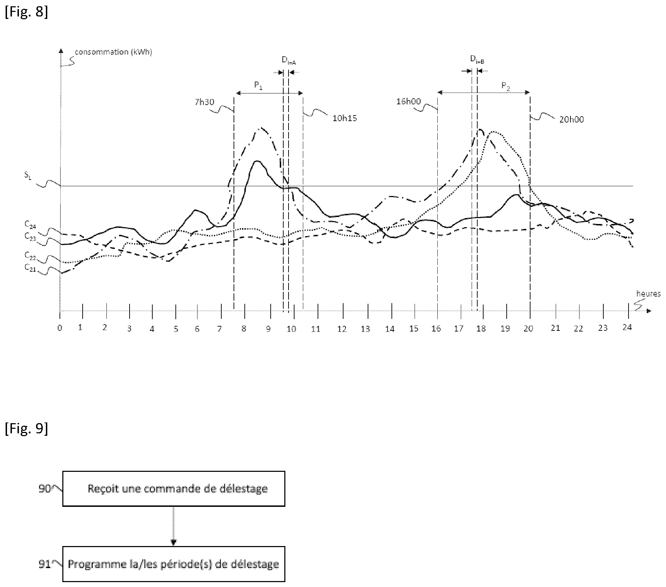

La figure FIG.9 est un diagramme décrivant les étapes d'une méthode de délestage destinée à être implémentée dans un compteur d'un réseau de distribution.

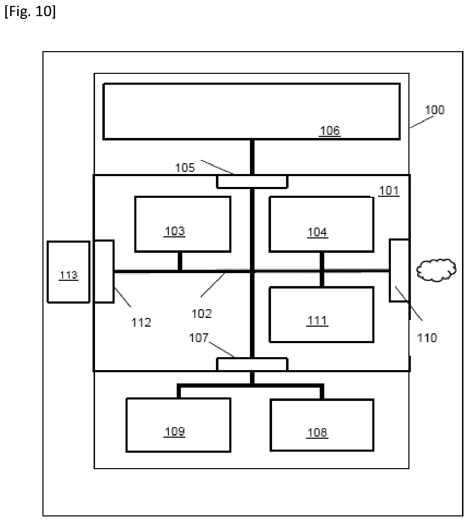

La figure FIG.10 est un schéma blocs d'un dispositif de mise en oeuvre d'une tête de réseau ou d'un compteur selon la présente divulgation.

DESCRIPTION DETAILLEE

Divers exemples de réalisation vont maintenant être décrits plus en détail, à titre d'exemples non limitatifs, en référence aux dessins qui accompagnent la présente divulgation et qui illustrent certains exemples de réalisation.

Les détails structurels et fonctionnels spécifiques décrits ici constituent des exemples non limitatifs. Les exemples de réalisation décrits ici peuvent faire l'objet de diverses modifications et formes alternatives. L'objet de la divulgation peut être réalisé sous de nombreuses formes différentes et ne doit pas être interprété comme étant limité aux seules réalisations présentées ici à titre d'exemples illustratifs. Il convient de comprendre qu'il n'y a aucune intention de limiter les modes de réalisation aux formes particulières décrites dans la suite de ce document.

La présente divulgation s'applique à tout réseau de distribution d'une ressource comportant au moins une tête de réseau et une pluralité de compteurs mesurant la consommation de ladite ressource. Il peut s'agir par exemple d'un réseau de distribution d'électricité, de gaz, d'eau, de chaleur, etc... Dans la suite de l'exposé, le réseau de distribution qui va être décrit est un réseau de distribution d'électricité. Il s'agit d'un exemple illustratif qui n'est pas limitatif.

Dans l'exemple non limitatif de la FIG.1, un réseau de distribution 10 comporte au moins une tête de réseau 11 qui est prévue pour communiquer via un sous-répartiteur 12 avec une pluralité de compteurs 13 qui sont installés chez des clients 14. Par exemple, la tête de réseau 11 communique avec le sous-répartiteur 12 via un réseau de télécommunication sans fil 15. Le réseau de communication sans fil 15 peut être un réseau GPRS, UMTS, LTE, 5G, ou un réseau à bande étroite IoT (de l'anglais Internet-of-Things). Par exemple le sous-répartiteur 12 communique avec les compteurs 13 via le réseau électrique par courant porteur en ligne (CPL).

Un compteur 13 installé chez un client 14 est configuré pour mesurer une consommation par le client 14, de la ressource qui est distribuée via le réseau de distribution 10. Par exemple, lorsque le réseau 10 est un réseau de distribution d'électricité, le compteur 13 mesure la consommation d'électricité du client 14.

Les compteurs 13 sont en outre configurés pour transmettre à la tête de réseau 11 des informations client représentatives de la consommation du client 14 sur une plage de temps déterminée. Par exemple les compteurs 13 transmettent tous les jours des informations représentatives de la consommation journalière. Ces informations client comportent par exemple une valeur de consommation par tranche de temps d'une durée déterminée, par exemple toutes les 15mn. Les valeurs transmises pour chaque tranche de temps de 15mn dans la journée permettent d'établir une courbe de charge pour le client pour la journée.

La tête de réseau 11 est quant à elle configurée pour transmettre des commandes de délestage à un ou plusieurs compteurs 13.

Les compteurs 13 sont configurés pour réaliser des délestages, conformément aux commandes de délestage qu'ils reçoivent de la tête de réseau 11. Par exemple, un compteur 13 peut réaliser un délestage en déconnectant un ou plusieurs éléments consommateur d'électricité chez un client 14, par exemple un ballon d'eau chaude et/ou un ou plusieurs radiateurs. Un tel délestage permet de réduire la consommation et ainsi d'éviter un risque d'écroulement du réseau de distribution.

Par exemple, l'échange de données entre les compteurs 13 et la tête de réseau 11 se fait par trames de données conformes au protocole DLMS/COSEM.

Dans les modes de réalisation qui vont être décrits ci-dessous à titre d'exemple, une plage de temps déterminée correspond à un jour spécifique de la semaine (c'est-à-dire le dimanche, le lundi, etc...). La tête de réseau 11 stocke alors les informations client pour chacun des jours de la semaine pris séparément. Ce mode de réalisation permet de tenir compte des différences de profils de consommation en fonction du jour de la semaine.

D'autres modes de réalisation sont possibles, utilisant d'autre plages de temps déterminées. Par exemple, une plage de temps déterminée peut correspondre à un jour ouvré quelconque ou un jour non-ouvré quelconque. Dans ce cas, la tête de réseau 11 stocke d'une part les informations client pour les jours ouvrés et d'autre part les informations client pour les jours non-ouvrés. Dans un autre exemple, la plage de temps déterminée correspond à une semaine ou à un mois spécifique de l'année. Dans ce cas, la tête de réseau 11 stocke les informations client pour chaque semaine ou pour chaque mois de l'année pris séparément. Dans cet exemple, il est possible de tenir compte des différences de profils de consommation en fonction des semaines de congés ou des saisons de l'année.

La FIG.2 représente les courbes de charge de quatre clients $C_{21}$, $C_{22}$, $C_{23}$ et $C_{24}$ sur une plage de temps déterminée, qui dans cet exemple correspond à un jour donné de la semaine (jour J). Dans cet exemple, on fait l'hypothèse que le jour J pour lequel les informations clients ont été collectées est un jour sans délestage pour les clients $C_{21}$ à $C_{24}$. Sur la FIG.2, on a représenté un seuil $S_L$, dit seuil client prédéfini, qui correspond à un maximum de consommation théorique pour un client.

La FIG.3 représente une courbe prévisionnelle représentant la consommation prévisionnelle globale, obtenue pour la même plage de temps, c'est-à-dire pour le jour J, à partir des courbes de charge des quatre clients de la FIG.2.

Sur la FIG.3, on a représenté un seuil $S_G$, dit seuil global prédéfini, qui correspond à un maximum de consommation théorique pour l'ensemble des clients $C_{21}$ à $C_{24}$. On observe sur la FIG.3 que le seuil global prédéfini $S_G$ est dépassé pendant deux périodes, dites période de surconsommation, $P_1$ comprises entre 7h30 et 10h15 et $P_2$ comprise entre 16h00 et 20h00. La consommation maximum pendant la période de surconsommation $P_1$ est notée Maxi et la consommation maximum pendant la période de surconsommation $P_2$ est notée $Max_2$.

Les périodes de surconsommation $P_1$ et $P_2$ sont reportées sur la FIG.2. On observe alors que les clients qui dépassent le seuil client prédéfini $S_L$ pendant la période de surconsommation $P_1$ sont les clients $C_{21}$ et $C_{23}$. Et les clients qui dépassent le seuil client prédéfini $S_L$ pendant la période de surconsommation $P_2$ sont les clients $C_{21}$ et $C_{22}$. Autrement dit : le client $C_{21}$ dépasse le seuil client prédéfini $S_L$ pendant les deux périodes de surconsommation $P_1$ et $P_2$ ; le client $C_{22}$ dépasse le seuil client prédéfini $S_L$ pendant la période de surconsommation $P_2$ ; le client $C_{23}$ dépasse le seuil client prédéfini $S_L$ pendant la période de surconsommation $P_1$ ; et le client $C_{24}$ ne dépasse jamais le seuil client prédéfini $S_L$.

Selon le mode de réalisation, chaque période de surconsommation peut donner lieu à une ou plusieurs périodes de délestage. Par exemple une période de surconsommation peut constituer une seule période de délestage ou peut correspondre à une pluralité de périodes de délestage.

La FIG.4 est un organigramme représentant les principales étapes d'une méthode de gestion de délestage destinée à être mise en oeuvre par la tête de réseau 11. A l'étape 40, la tête de réseau 11 reçoit en provenance d'une pluralité de compteurs du réseau de distribution des informations client représentatives de la consommation du client sur une plage de temps déterminée (par exemple un jour J de la semaine). A l'étape 41, la tête de réseau 11 détermine, à partir des informations représentatives de la consommation des clients, une consommation prévisionnelle globale sur une plage de temps pour l'ensemble des compteurs. A l'étape 42, la tête de réseau 11 détermine une ou plusieurs périodes de délestage $D_i$ à partir des informations client reçues. A l'étape 43, la tête de réseau 11 détermine un ou plusieurs compteurs éligibles au délestage pour chaque période de délestage $D_i$, en comparant les informations client sur la période de délestage au seuil client prédéfini $S_L$. A l'étape 44, la tête de réseau 11 sélectionne les compteurs à délester parmi les compteurs éligibles. A l'étape 45, la tête de réseau 11 envoie une commande de délestage aux compteurs sélectionnés concernant une ou plusieurs occurrences futures de la plage de temps déterminée (par exemple pour le jour J de la semaine suivante).

Dans la suite de la description, deux modes de réalisation vont être décrits en détails à titre d'exemples non limitatifs.

Dans le premier mode de réalisation, les périodes de surconsommation constituent chacune une seule période de délestage. Ainsi, en reprenant l'exemple décrit sur les figures FIG.2 et FIG.3, à l'étape 42, la tête de réseau 11 détermine deux périodes de délestage $D_1=P_1$ et $D_2=P_2$. Et à l'étape 43, elle détermine les compteurs éligibles pour chacune des deux périodes $D_1$ et $D_2$ en comparant les informations de consommation client sur les périodes de délestage $D_1$ et $D_2$ au seuil client prédéfini $S_L$. Dans l'exemple de la FIG.2, il résulte de cette comparaison que : le client 21 est éligible au délestage pendant les deux périodes $D_1$ et $D_2$ ; le client 22 est éligible au délestage pendant la période $D_2$ ; le client 23 est éligible au délestage pendant la période $D_1$ ; et le client 24 n'est pas éligible au délestage.

La FIG.5 décrit l'étape suivante 44 dans ce premier mode de réalisation. Comme illustré sur la FIG.5, l'étape 44 se décompose en deux étapes 51 et 52 qui sont exécutées pour chaque période de délestage $D_i$ identifiée à l'étape 42.

A l'étape 51, la tête de réseau 11 détermine un nombre $N_i$ de compteurs à délester sur la période $D_i$ pour compenser l'écart $\Delta_i$ entre le maximum de la consommation prévisionnelle globale $Max_i$ sur chaque période de délestage $D_i$ et le seuil global prédéfini $S_G$ : $\Delta_i = Max_i - S_G$. Par exemple, le nombre de compteurs $N_i$ à délester est fonction du rapport entre l'écart à compenser $\Delta_i$ et le seuil client prédéfini $S_L$. Par exemple $N_i = INT\left(\frac{\Delta_i}{S_L}\right) + 1$.

Puis à l'étape 52, la tête de réseau 11 sélectionne $N_i$ compteurs à délester pour la période de délestage $D_i$ parmi les compteurs qui ont été déterminés comme éligibles au délestage pour la période $D_i$ à l'étape 43. La sélection peut être aléatoire. Elle peut aussi prendre en compte le type d'abonnement du client, et/ou le nombre de délestages réalisés dans un passé donné pour les clients éligibles, et/ou le nombre de périodes de délestage identifiées pour chaque client éligible, etc.

Ensuite, à l'étape 45, la tête de réseau envoie une commande de délestage aux compteurs sélectionnés pour au moins une occurrence future de la plage de temps considérée (par exemple le jour J d'une ou plusieurs semaines suivantes). Par exemple, dans l'exemple de la FIG.2, en supposant que les compteurs sélectionnés soient les compteurs des clients $C_{21}$ et $C_{22}$, la commande envoyée au compteur du client $C_{21}$ spécifie deux périodes de délestage $D_1$ et $D_2$ et la commande envoyée au compteur du client $C_{22}$ spécifie une période de délestage $D_2$.

Par exemple, la commande de délestage comporte une indication de début $T_d$ et une indication de fin $T_f$ (ou alternativement une indication de durée) pour chaque période de délestage de la plage de temps déterminée. Cette commande est par exemple transmise dans une trame de données DLMS/COSEM sous forme d'un objet COSEM avec un code OBIS de délestage, c'est-à-dire un objet « Limiter » avec le code OBIS indiqué dans le tableau ci-dessous :

| Objet | IC | OBIS code | | | | | |
|---|---|---|---|---|---|---|---|
| | | A | B | C | D | E | F |
| Limiter | 71, limiter | 0 | b | 17 | 0 | e | 255 |

La trame de données comporte un champ contenant les données utiles (payload en anglais). Ce champ comporte par exemple:

- un octet pour indiquer le nombre de périodes de délestage applicables au compteur auquel la commande est destinée ;
- pour chaque période de délestage, un octet pour indiquer l'heure et un octet pour indiquer la minute du début du délestage ; et un octet pour indiquer l'heure et un octet pour indiquer la minute de la fin du délestage.

Avantageusement, on s'assure que tous les compteurs concernés par une même période de délestage ne commencent pas le délestage exactement en même temps et n'arrêtent pas leur délestage exactement en même temps. Cela engendrerait en effet des changements de charge néfastes pour l'équilibre du réseau de distribution.

Dans un premier exemple, les commandes envoyées aux différents compteurs contiennent des indications de début $T_d$ pour une même période de délestage décalées dans le temps l'une par rapport à l'autre. Par exemple le compteur du client $C_{21}$ reçoit une commande de début de délestage avec une indication de début à 16h00 et une indication de fin à 20h00 pour la période $P_2$. Et le compteur du client $C_{22}$ reçoit une commande de début de délestage avec une indication de début à 16h01 décalée d'une minute dans le temps pour la même période $P_2$. Dans le cas où la commande contient une indication de fin, celle-ci est décalée de la même durée (donc dans cet exemple l'indication de fin est égale à 20h01 pour le compteur du client $C_{22}$).

Dans un autre exemple, les indications de début et de fin $T_d$ et $T_f$ sont les mêmes pour tous les compteurs sélectionnés. Et chaque compteur fait commencer et arrêter le délestage selon une variable aléatoire gérée par le compteur qui implique un début et une fin à un instant aléatoire compris dans un intervalle autour des indications de début $T_d$ et de fin $T_f$ respectivement. Par exemple chaque compteur débute le délestage aléatoirement dans l'intervalle $[T_d$-2'30" ; $T_d$+2'30"] et l'arrête aléatoirement dans l'intervalle $[T_f$-2'30" ; $T_f$+2'30"].

Dans le second mode de réalisation, pendant une phase d'apprentissage la tête de réseau 11 apprend l'impact du délestage pour chaque compteur. Cet apprentissage est indépendant des besoins de délestage. Il peut se faire une fois ou régulièrement, par exemple tous les ans, une fois en été et une fois en hiver. L'apprentissage se fait sur des données réelles. Par exemple, durant la phase d'apprentissage, pour chaque plage de temps considérée, une commande de délestage est envoyée à chaque compteur par tranches de temps, afin d'obtenir des informations représentatives de la consommation du client en mode avec délestage pour chaque tranche de temps de chaque plage de temps. Par exemple, lorsque la plage de temps considérée correspond à un jour spécifique de la semaine, une commande de délestage est envoyée à tous les compteurs toutes les 15mn pour chaque jour spécifique de la semaine afin d'apprendre la réponse des compteurs aux commandes de délestage. Par exemple lorsque la plage de temps considérée est une journée, elle peut être découpée en 96 tranches de temps de 15mn chacune.

La FIG.6 décrit l'étape 44 dans ce second mode de réalisation. Comme illustré sur la FIG.7 l'étape 44 se décompose en deux étapes 61 et 62 qui sont exécutées pour chaque période de délestage $D_i$ identifiée à l'étape 42. A l'étape 61, la tête de réseau 11 détermine un gain de délestage pour les compteurs éligibles au délestage, en comparant les informations de consommation transmises par les compteurs en mode hors délestage, aux informations apprises pendant la phase d'apprentissage, qui sont représentatives de la consommation du client en mode avec délestage. La tête de réseau 11 sélectionne ensuite à l'étape 62 les compteurs à délester, en fonction des gains de délestage obtenus pour les compteurs éligibles au délestage.

Par exemple, la tête de réseau détermine un nombre de compteurs nécessaire pour obtenir le gain cible, à partir des gains de délestage des compteurs éligibles pris par ordre de gain de délestage décroissant. Par exemple, la tête de réseau additionne les gains de délestage des compteurs dans le sens décroissant jusqu'à atteindre le gain cible et sélectionne les compteurs correspondant pour le délestage. Ce mode de réalisation permet de cibler les clients pour lesquels le délestage aura le plus fort impact.

Dans un autre exemple, la tête de réseau détermine, à partir des gains de délestage des compteurs éligibles, un nombre de compteurs supérieur au nombre de compteurs nécessaire pour obtenir le gain cible, puis effectue une sélection parmi les compteurs déterminés pour atteindre le gain cible. La sélection est par exemple aléatoire ou peut prendre en compte divers paramètres comme mentionné plus haut. Ce mode de réalisation permet de cibler les clients pour lesquels le délestage aura le plus fort impact tout en évitant de toujours sélectionner les mêmes clients.

La FIG.7 décrit un exemple de réalisation de l'étape de sélection 62. Dans cet exemple, l'étape 62 se décompose en deux étapes 71 et 72. A l'étape 71, la tête de réseau 11 détermine parmi les compteurs éligibles pris par ordre de gain de délestage décroissant, un premier, un deuxième, et un troisième groupe de compteurs comportant respectivement Q1, Q2 et Q3 compteurs éligibles, tels que la somme des gains de délestage des Q1+Q2 compteurs du premier et du deuxième groupe permette d'atteindre le gain cible, et que la somme des gains de délestage des Q2+Q3 compteurs du deuxième et du troisième groupe permette d'atteindre le gain cible. A l'étape 72, une sélection de Q2+Q3 compteurs à délester est ensuite réalisée parmi les Q1+Q2+Q3 compteurs déterminés, par exemple aléatoirement. Par exemple les Q1+Q2 compteurs du premier et du deuxième groupe sont obtenus en additionnant les gains de délestage des compteurs dans le sens décroissant jusqu'à atteindre le gain cible. Puis les Q2+Q3 compteurs du deuxième et du troisième groupe sont obtenus en additionnant les gains de délestage des compteurs dans le sens décroissant à partir du début du deuxième groupe jusqu'à atteindre le gain cible.

De préférence, les périodes de délestage sont calées sur les tranches de temps utilisées pendant la phase d'apprentissage. Le plus simple est d'utiliser des tranches de temps d'apprentissage et des périodes de délestage qui ont la même durée (par exemple 15mn). Il est aussi possible d'utiliser des périodes de délestage dont la durée est un multiple des tranches de temps d'apprentissage. Ainsi, dans ce second mode de réalisation, les périodes de surconsommation $P_1$ et $P_2$ représentées sur les figures FIG.2 et FIG.3 correspondent à une ou plusieurs périodes de délestage $D_i$. La FIG.8 représente les mêmes courbes de charge que la FIG.2, sur lesquelles on a fait figurer, à titre d'exemple, deux périodes de délestage correspondant à deux tranches de temps d'apprentissage : une période de délestage $D_{i=A}$ qui fait partie de la première période de surconsommation $P_1$ et qui est comprise entre 9h30 et 9h45, et une période de délestage $D_{i=B}$ qui fait partie de la seconde période de surconsommation $P_2$ et qui est comprise entre 17h30 et 17h45 (avec $0 < A < B \leq 96$). On observe sur la FIG.8 que pendant la période de délestage $D_{i=A}$, seul le client $C_{21}$ est éligible au délestage. Et pendant la période de délestage $D_{i=B}$, les clients $C_{21}$ et $C_{22}$ sont tous les deux éligibles.

Dans ce second mode de réalisation, la commande de délestage envoyée à l'étape 45 comporte une indication d'un nombre de périodes de délestage pour la plage de temps concernée ainsi qu'un identifiant de chacune des périodes de délestage. Par exemple si la plage de temps correspond à une journée, et que les périodes de délestage sont fixées à 15mn, il y a 96 périodes de délestage possible sur la journée. La commande indiquera combien de période de délestage sont prévues pour le destinataire de la commande, ainsi que les identifiants des périodes devant faire l'objet d'un délestage parmi les 96 possibilités. Dans ce mode de réalisation, avantageusement, chaque compteur fait commencer et arrêter le délestage selon une variable aléatoire gérée par le compteur qui implique un début et une fin à un instant aléatoire par rapport au début et à la fin de la période de délestage.

Par souci de simplicité, les modes de réalisation décrit ici concernent des commandes de délestage avec un seul niveau de délestage (la commande est binaire). Ceci n'est pas limitatif. Les modes de réalisation décrits ici peuvent être aisément adaptés par la personne du métier pour permettre plusieurs niveaux de délestage (dans l'hypothèse d'installations client avec plusieurs circuits de délestage).

De préférence, pour la détermination de la consommation prévisionnelle globale et pour la détermination des clients éligibles au délestage, seules sont prises en compte les informations représentatives de la consommation du client en mode hors délestage. Par exemple si le client a fait l'objet d'un délestage le jour J de la semaine en cours, la tête de réseau 11 utilise pour ce client les informations du dernier jour J qui n'a pas fait l'objet d'un délestage pour ce client (au lieu d'utiliser les informations transmises pour le jour J de la semaine en cours).

La FIG.9 est un organigramme représentant les principales étapes d'une méthode de délestage destinée à être mise en oeuvre par un compteur du réseau de distribution. A l'étape 90, le compteur reçoit la commande qui a été transmise par la tête de réseau à l'étape 45. A l'étape 91, le compteur lit le contenu de la commande et programme un ou plusieurs délestages à partir des indications de début et de fin de délestage contenues dans la commande.

Dans un mode de réalisation, le compteur programme le ou les délestages de sorte qu'ils soient déclenchés et/ou arrêtés selon une variable aléatoire gérée par le compteur qui implique un début et une fin de délestage à un instant aléatoire par rapport au début et à la fin de la période de délestage spécifiée dans la commande de délestage.

La tête de réseau 11 et les compteurs 13 peuvent par exemple être implémentés sous la forme d'un dispositif tel que décrit sur la figure FIG.10. Ce dispositif référencé 100 comprend une carte de circuit imprimé 101 sur laquelle un bus de communication 102 relie un processeur 103, une mémoire vive 104, un support de stockage 111, éventuellement une interface 105 pour connecter un écran 106, une série de connecteurs 107 pour connecter des dispositifs ou des modules d'interface utilisateur tels qu'une souris ou un trackpad 108 et un clavier 109, une interface de réseau sans fil 110 et/ou une interface de réseau câblé 112. Selon les fonctionnalités requises, notamment selon que le dispositif 100 est utilisé dans une tête de réseau 11 ou un compteur 13, le dispositif peut ne mettre en oeuvre qu'une partie de ce qui précède. Par exemple, un compteur 13 n'est en général pas connecté à une souris, un trackpad ou un clavier, ni à un réseau sans fil ou un réseau câblé, les échanges d'informations avec le compteur se faisant habituellement par courant porteur en ligne. Certains modules de la figure FIG.10 peuvent être internes ou connectés à l'extérieur, auquel cas ils ne font pas nécessairement partie intégrante du dispositif lui-même. Par exemple, l'écran 106 peut être un écran qui n'est connecté au dispositif 100 que dans des circonstances spécifiques, ou le dispositif 100 peut être contrôlé par un autre appareil doté d'un écran, et dans ce cas le dispositif 100 ne comporte aucun écran 106 ni aucune interface 105.

La mémoire 111 contient un ou plusieurs codes logiciels qui, lorsqu'ils sont exécutés par le processeur 103, permettent à la tête de réseau 11 d'exécuter la méthode de gestion de délestage décrite ici. Dans un mode de réalisation donné à titre d'exemple, un support de stockage amovible 113, tel qu'une clé USB, peut également être connecté. Par exemple, le support de stockage détachable 113 peut contenir les codes logiciels à télécharger dans la mémoire 111.

Le processeur 103 peut être n'importe quel type de processeur tel qu'une unité centrale de traitement ("CPU") ou un microprocesseur dédié tel qu'un microcontrôleur intégré ou un processeur de signal numérique ("DSP").

Le dispositif 100 peut également comprendre d'autres composants que l'on trouve généralement dans les systèmes informatiques, tels qu'un système d'exploitation, des gestionnaires de file d'attente, des pilotes de périphériques ou un ou plusieurs protocoles de réseau qui sont stockés dans la mémoire 111 et exécutés par le processeur 103.

Les personnes du métier comprendront que tous les schémas fonctionnels présentés ici représentent des vues conceptuelles, données à titre d'exemple, de circuits incorporant les principes de la divulgation.

Chaque fonction, bloc, étape décrit peut être mis en oeuvre dans du matériel, des logiciels, des microprogrammes, des intergiciels, des microcodes ou toute combinaison appropriée de ceux-ci. S'ils sont mis en oeuvre dans un logiciel, les fonctions ou blocs des schémas fonctionnels et des organigrammes peuvent être mis en oeuvre par des instructions de programme d'ordinateur/codes de logiciel, qui peuvent être stockés ou transmis sur un support lisible par ordinateur, ou chargés sur un ordinateur à usage général, un ordinateur à usage spécial ou un autre appareil de traitement programmable et/ou un système, de sorte que les instructions de programme d'ordinateur ou les codes de logiciel qui s'exécutent sur l'ordinateur ou un autre appareil de traitement programmable, créent les moyens de mettre en oeuvre les fonctions décrites dans la présente description.

Bien que les aspects de la présente divulgation aient été décrits en référence à des réalisations particulières, il convient de comprendre que ces réalisations ne font qu'illustrer les principes et les applications de la présente divulgation. Il est donc entendu que de nombreuses modifications peuvent être apportées aux modes de réalisation illustratifs et que d'autres arrangements peuvent être conçus sans s'écarter de l'esprit et de la portée de la divulgation tels que déterminés sur la base des revendications et de leurs équivalents.

Les avantages et les solutions aux problèmes ont été décrits ci-dessus en ce qui concerne des modes de réalisation spécifiques de l'invention. Cependant, les avantages, les bénéfices, les solutions aux problèmes, et tout élément qui peut causer ou résulter en de tels avantages, bénéfices ou solutions, ou causer de tels avantages, bénéfices ou solutions à devenir plus prononcés ne doivent pas être interprétés comme une caractéristique ou un élément critique, requis, ou essentiel de l'une ou de l'ensemble des revendications.

## Revendications

**1.** Méthode de gestion de délestage dans un réseau de distribution d'une ressource, le réseau comportant au moins une tête de réseau et une pluralité de compteurs configurés pour:

- mesurer une consommation de ladite ressource par un client,
- transmettre à la tête de réseau des informations représentatives de la consommation du client,
- recevoir une commande de délestage en provenance de la tête de réseau et déclencher un basculement d'un mode de fonctionnement hors délestage à un mode de fonctionnement avec délestage en fonction de ladite commande,

**caractérisée en ce qu'**elle comporte des étapes pour :

- déterminer, à partir des informations représentatives de la consommation des clients, une consommation prévisionnelle globale sur une plage de temps pour l'ensemble des compteurs,
- déterminer une ou plusieurs périodes de délestage pour ladite plage de temps, en comparant la consommation prévisionnelle globale à un seuil global prédéfini,
- déterminer un ou plusieurs compteurs éligibles au délestage, pour la ou les périodes de délestage, en comparant les informations représentatives de la consommation du client sur la période de délestage à un seuil client prédéfini,
- sélectionner un ou plusieurs compteurs à délester parmi les compteurs éligibles, pour obtenir un gain cible permettant de compenser un écart entre un maximum de la consommation prévisionnelle globale sur la période de délestage et le seuil global prédéfini,
- envoyer une commande de délestage aux compteurs sélectionnés, ladite commande concernant une ou plusieurs occurrences futures de ladite plage de temps et spécifiant une ou plusieurs périodes de délestage pour ladite plage de temps.

**2.** Méthode de gestion de délestage selon la revendication 1, **caractérisée en ce qu'**elle comporte une étape pour déterminer un gain de délestage pour les compteurs éligibles, en comparant des informations représentatives de la consommation du client en mode hors délestage, à des informations, apprises pendant une phase d'apprentissage, représentatives de la consommation du client en mode avec délestage, et **en ce que** la sélection des compteurs à délester est fonction desdits gains de délestage.

3. Méthode de gestion de délestage selon la revendication 2, **caractérisé en ce que** durant la phase d'apprentissage, pour chaque plage de temps considérée, une commande de délestage est envoyée à chaque compteur par tranches de temps, afin d'obtenir des informations représentatives de la consommation du client en mode délestage, pour chaque tranche de temps de chaque plage de temps, les périodes de délestage étant calées sur lesdites tranches de temps.

4. Méthode de gestion de délestage selon la revendication 2, **caractérisée en ce que** la sélection des compteurs à délester comporte :

   - une détermination d'un premier nombre de compteurs supérieur au nombre de compteurs nécessaire pour obtenir le gain cible, et
   - une sélection aléatoire d'un deuxième nombre de compteurs, inférieur au premier nombre, pour obtenir le gain cible.

5. Méthode de gestion de délestage selon la revendication 2, **caractérisée en ce que** la sélection des compteurs à délester comporte :

   - une détermination parmi les compteurs éligibles pris par ordre de gain de délestage décroissant, d'un premier, second, et troisième groupe comportant respectivement Q1, Q2 et Q3 compteurs éligibles, la somme des gains de délestage des Q1+Q2 compteurs du premier et du second groupe permettant d'atteindre le gain cible, et la somme des gains de délestage des Q2+Q3 compteurs du second et du troisième groupe permettant d'atteindre le gain cible,
   - une sélection parmi les Q1+Q2+Q3 compteurs éligibles de Q2+Q3 compteurs à délester.

6. Méthode de gestion de délestage selon la revendication 1, **caractérisée en ce que** la commande de délestage comporte un nombre de périodes de délestage pour ladite plage de temps et un identifiant de chaque période de délestage.

7. Méthode de gestion de délestage selon l'une quelconque des revendications 1 à 6, **caractérisée en ce que** seules sont prise en compte, pour la détermination de la consommation prévisionnelle globale, les informations représentatives de la consommation du client en mode hors délestage.

8. Méthode de gestion de délestage selon l'une quelconque des revendications 1 à 7, **caractérisée en ce que** seules sont prise en compte, pour la détermination des compteurs éligibles au délestage, les informations représentatives de la consommation du client en mode hors délestage.

9. Dispositif tête de réseau comportant des moyens pour la mise en oeuvre d'une méthode de gestion de délestage dans un réseau de distribution selon l'une quelconque des revendication 1 à 8.

10. Méthode de délestage par un compteur appartenant à un réseau de distribution d'une ressource, le compteur étant configuré pour mesurer une consommation de ladite ressource par un client et pour transmettre à une tête de réseau du réseau de distribution des informations client représentatives de la consommation du client sur une plage de temps déterminée, la méthode comportant une étape de réception d'une commande de délestage provenant de la tête de réseau, la commande de délestage spécifiant une ou plusieurs périodes de délestage à mettre en oeuvre pendant une ou plusieurs occurrences futures de la plage de temps déterminée.

11. Méthode de délestage selon la revendication 10, **caractérisée en ce que** la commande de délestage comporte un nombre de périodes de délestage pour ladite plage de temps et un identifiant de chaque période de délestage.

12. Méthode de délestage selon l'une quelconque des revendications 10 ou 11, caractérisée le délestage est déclenché et/ou terminé à un instant aléatoire par rapport aux périodes de délestage spécifiées dans la commande de délestage.

13. Dispositif compteur comportant des moyens de mise en oeuvre d'une méthode de délestage selon l'une quelconque des revendications 10 à 12.

**14.** Produit programme d'ordinateur comportant des instructions qui lorsqu'elles sont exécutées par au moins un processeur causent la mise en oeuvre d'une méthode de gestion de délestage selon l'une quelconque des revendications 1 à 8.

**15.** Produit programme d'ordinateur comportant des instructions qui lorsqu'elles sont exécutées par au moins un processeur causent la mise en oeuvre d'une méthode de délestage selon l'une quelconque des revendications 10 à 12.

**16.** Support de stockage non transitoire lisible par un ordinateur comportant des instructions qui lorsqu'elles sont exécutées par un processeur causent la mise en oeuvre d'une méthode de gestion de délestage selon l'une quelconque des revendications 1 à 8

**17.** Support de stockage non transitoire lisible par un ordinateur comportant des instructions qui lorsqu'elles sont exécutées par un processeur causent la mise en oeuvre d'une méthode de délestage selon l'une quelconque des revendications 10 à 12.

[Fig. 1]

[Fig. 2]

[Fig. 3]

[Fig. 4]

[Fig. 5]

Détermine $N_i$
(nombre de compteurs à délester sur $D_i$) — 51

Sélectionne $N_i$ compteurs
parmi les compteurs éligibles — 52

44

[Fig. 6]

Détermine les gains de délestage
des compteurs éligibles — 61

Sélectionne compteurs à délester
en fonction des gains de délestage — 62

44

[Fig. 7]

Détermine $(Q1+Q2+Q3)_i$ candidats au
délestage en fonction des gains de délestage — 71

Sélectionne $(Q2+Q3)_i$ compteurs
parmi les compteurs éligibles — 72

62

[Fig. 8]

[Fig. 9]

[Fig. 10]

Europäisches
Patentamt

European
Patent Office

Office européen
des brevets

# RAPPORT DE RECHERCHE EUROPEENNE

**Numéro de la demande**

EP 24 21 7653

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 9 031 703 B2 (NAKAMURA TAKUJI [JP]; YAMANE TOSHIHIRO [JP] ET AL.) 12 mai 2015 (2015-05-12) * colonnes 7, 8, 16, 17, 20, 21, 26, 27, 29; figures 1,2,9,11,13,15,18, 19 * ----- | 1,6,9-17 | INV. H02J3/00 G06Q50/06 H02J3/14 H02J13/00 G06Q10/04 |
| X | US 2015/170297 A1 (CHEN MENG-SENG [TW] ET AL) 18 juin 2015 (2015-06-18) * alinéas [0009] - [0012], [0032] - [0040], [0055], [0058]; revendications 8,18; figures 1-4,8-10 * ----- | 1-5,9, 10,13-17 | |
| X | US 4 489 386 A (BREDDAN JOSEPH A [US]) 18 décembre 1984 (1984-12-18) * colonnes 2-9; figures 1-4 * ----- | 1,7-10, 13-17 | |
| X | JP 2015 019517 A (DAIWA HOUSE IND) 29 janvier 2015 (2015-01-29) * alinéas [0034] - [0042], [0055], [0066] - [0068]; revendications 1,3; figures 1-5,11-13 * ----- | 1,9,10, 13-17 | |
| A | US 2023/273581 A1 (NAKAGAWA YOSHIHIRO [JP] ET AL) 31 août 2023 (2023-08-31) * alinéas [0006] - [0012], [0088] - [0100]; figures 6-10 * ----- | 1-17 | DOMAINES TECHNIQUES RECHERCHES (IPC) H02J G06Q G01D |
| A | US 2015/200544 A1 (KITAJI MITSUHIRO [JP]) 16 juillet 2015 (2015-07-16) * alinéas [0045] - [0084]; figures 1-5 * ----- | 1-17 | |
| A | US 2018/212428 A1 (NIEMI MIKKO [US] ET AL) 26 juillet 2018 (2018-07-26) * alinéas [0005] - [0006], [0012], [0025] - [0026], [0067] - [0080]; revendications 1,7,9,12,15; figures 1-3 * ----- | 1-17 | |

Le présent rapport a été établi pour toutes les revendications

| Lieu de la recherche | Date d'achèvement de la recherche | Examinateur |
|---|---|---|
| Munich | 31 mars 2025 | Tchegho Kamdem, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 21 7653

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-03-2025

| Document brevet cité au rapport de recherche | | Date de publication | Membre(s) de la famille de brevet(s) | | Date de publication |
|---|---|---|---|---|---|
| US 9031703 | B2 | 12-05-2015 | JP | 5696877 B2 | 08-04-2015 |
| | | | JP | 5822207 B2 | 24-11-2015 |
| | | | JP | 2012080679 A | 19-04-2012 |
| | | | JP | 2012210151 A | 25-10-2012 |
| | | | SG | 179328 A1 | 27-04-2012 |
| | | | US | 2012083927 A1 | 05-04-2012 |
| US 2015170297 | A1 | 18-06-2015 | TW | 201523465 A | 16-06-2015 |
| | | | US | 2015170297 A1 | 18-06-2015 |
| US 4489386 | A | 18-12-1984 | AUCUN | | |
| JP 2015019517 | A | 29-01-2015 | JP | 5796041 B2 | 21-10-2015 |
| | | | JP | 2015019517 A | 29-01-2015 |
| US 2023273581 | A1 | 31-08-2023 | AU | 2021355061 A1 | 18-05-2023 |
| | | | BR | 112023005644 A2 | 25-04-2023 |
| | | | CN | 116235384 A | 06-06-2023 |
| | | | EP | 4224672 A1 | 09-08-2023 |
| | | | JP | 7093034 B2 | 29-06-2022 |
| | | | JP | 2022057282 A | 11-04-2022 |
| | | | JP | 2022113860 A | 04-08-2022 |
| | | | US | 2023273581 A1 | 31-08-2023 |
| | | | WO | 2022070632 A1 | 07-04-2022 |
| US 2015200544 | A1 | 16-07-2015 | EP | 2874263 A1 | 20-05-2015 |
| | | | JP | 5908355 B2 | 26-04-2016 |
| | | | JP | 2014018045 A | 30-01-2014 |
| | | | US | 2015200544 A1 | 16-07-2015 |
| | | | WO | 2014010245 A1 | 16-01-2014 |
| US 2018212428 | A1 | 26-07-2018 | BR | 112019014863 A2 | 14-04-2020 |
| | | | CA | 3050267 A1 | 02-08-2018 |
| | | | EP | 3574560 A1 | 04-12-2019 |
| | | | EP | 3896813 A1 | 20-10-2021 |
| | | | ES | 2901536 T3 | 22-03-2022 |
| | | | PT | 3574560 T | 21-10-2021 |
| | | | US | 2018212428 A1 | 26-07-2018 |
| | | | WO | 2018140564 A1 | 02-08-2018 |

EPO FORM P0460

Pour tout renseignement concernant cette annexe : voir Journal Officiel de l'Office européen des brevets, No.12/82

**EP 4 568 045 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20220376504 A1